Europäisches Patentamt

(19) European Patent Office

Office européen des brevets

(11) Publication number : **0 347 402 B1**

# (12) EUROPEAN PATENT SPECIFICATION

(45) Date of publication of patent specification :
07.04.93 Bulletin 93/14

(51) Int. Cl.⁵ : **A23L 1/05**, A23G 1/00

(21) Application number : 89870093.5

(22) Date of filing : 14.06.89

(54) Microcrystalline cellulose-based stabilizer system for dry mix instant chocolate drink.

(30) Priority : 17.06.88 US 208344

(43) Date of publication of application :
20.12.89 Bulletin 89/51

(45) Publication of the grant of the patent :
07.04.93 Bulletin 93/14

(84) Designated Contracting States :
AT BE CH DE ES FR GB GR IT LI LU NL SE

(56) References cited :
EP-A- 0 040 386
CA-A- 1 219 764
GB-A- 2 022 390
US-A- 3 684 523
US-A- 3 947 604
PATENT ABSTRACTS OF JAPAN
vol.9,no.228(c-303)(1951) 13 September 1985;
& JP -A-60 87775

(73) Proprietor : FMC Corporation
2000 Market Street
Philadelphia Pennsylvania 19103 (US)

(72) Inventor : Tuason, Domingo Custodio, Jr.
3607 Sunny Lea Road
Bensalem Pennsylvania 19020 (US)
Inventor : McGinley, Emanuel Joseph
57 Kirby Road
Morrisville Pennsylvania 19067 (US)

(74) Representative : Plucker, Guy et al
OFFICE KIRKPATRICK 4 Square de Meeûs
B-1040 Bruxelles (BE)

## Description

The invention relates to a dry powder composition containing microcrystalline cellulose, useful as the functional agent in an instant chocolate drink mix. More particularly, the functional agent may be a spray-dried composition containing colloidal microcrystalline cellulose, starch, and a water-soluble component like maltodextrin.

Dry mix instant chocolate drink products are powdered formulations that, when mixed with water or milk, yield a chocolate drink. A serious disadvantage of many such chocolate drinks is that the cocoa particles settle very rapidly after an initial stirring, forming a chocolate sediment at the bottom of the container and giving the liquid a dilute, watery flavor.

Commercially-prepared chocolate drinks typically employ a stabilizer that functions as a suspending agent for the cocoa particles. Colloidal microcrystalline cellulose, such as the carboxymethyl cellulose-coated microcrystalline cellulose (MCC) described in Durand et al., U.S. Patent No. 3,539,365 and sold by FMC Corporation under the brand names Avicel® RC and Gelstar®, is one such stabilizing agent. The heat-sterilized artificial dairy drink described in McGinley et al., U.S. Patent No. 3,684,523 utilizes the colloidal MCC of Durand et al. '365.

Colloidal microcrystalline cellulose must be activated, or "peptized," once it is dispersed in an aqueous medium, to cause the individual colloidal MCC particles to deagglomerate and provide optimum suspension properties. Activation of a stabilizer system containing colloidal microcrystalline cellulose often requires high levels of shear, such as provided by commercial mixing devices like propeller mixers or homogenizers. These procedures are feasible for stabilizing agents intended for use in commercially-prepared drinks but are not practical for home use.

Stabilizers intended for home use or vending machine use, however, should be capable of being activated by simple spoon stirring. The stringency of this requirement can be appreciated only if it is recognized that rapid dispersion and long-term suspension of cocoa particles in an aqueous medium is a severe test for any solids stabilizing agent.

One commercially-available stabilizer intended for home use instant mixes is that described in McGinley, U.S. Patent No. 4,311,717 and marketed under the brand name Microquick®. It contains colloidal MCC in combination with milk solids or whey. Although this stabilizer normally provides satisfactory functionality, stabilizer systems for certain end-use applications, like instant chocolate drink mixes intended for vending machine use, must be capable of being activated with only simple spoon stirring. The stabilizing agent of this invention is capable of satisfying this need.

The present invention is a stabilizing agent, useful as a rapid dispersing agent for suspending solids in an aqueous medium, which is a coprocessed, codried powdered composition containing colloidal microcrystalline cellulose; starch, in an amount less than the weight of colloidal microcrystalline cellulose but sufficient in amount to activate the colloidal microcrystalline cellulose in an aqueous medium, promoting its rapid peptization with minimal agitation of the aqueous medium; and a non-thickening, water-soluble binder, in an amount such that the weight ratio of binder to colloidal microcrystalline cellulose is within the range of about 0.6:1 to 9:1.

The stabilizing agent is preferably a spray dried composition.

The colloidal microcrystalline cellulose is preferably microcrystalline cellulose intimately associated with a minor amount, e.g., 3-15%, of sodium carboxymethyl cellulose.

The starch is preferably a low amylose starch. The concentration of starch in the stabilizing agent should be less than that amount which causes gelation-like thickening when the agent is employed in an aqueous medium. The starch is preferably present in an amount such that the weight ratio of colloidal microcrystalline cellulose to starch is within the range of about 3:2 to 7:1.

The third component of the stabilizing agent, a non-thickening, water-soluble binder, is preferably selected from the group consisting of maltodextrin, whey and non-fat dry milk.

The stabilizing agent of this invention is particularly suited for use in dry mix instant chocolate drink formulations that are reconstituted with hot water. The amount of stabilizing agent used should be sufficient to yield a reconstituted beverage that contains about 0.5-3 wt. %, preferably about 0.5-1.5 wt. % colloidal microcrystalline cellulose.

The stabilizing agent of this invention is especially useful for suspending cocoa solids in chocolate drink formulations that are prepared from dry mixes that are typically reconstituted with hot water. This stabilizing agent has the advantage of providing excellent dispersion and suspension of cocoa (or other) solids in aqueous media, with minimal stirring or agitation of the dry mix during reconstitution with water or other aqueous liquid.

Although the stabilizing agent is best suited for use in suspending cocoa solids, it is believed equally useful in other food and non-food aqueous solids suspension systems that require rapid reconstitution or preparation from a dry powder mixture, under conditions permitting only a minimum of agitation or mixing to achieve complete solids dispersion and suspension. Examples of other applications for the stabilizing agent of this invention include instant dry mix gravies, cheese sauce mixes, soup mixes, and other foods or beverages obtained by mixing with water, particularly hot or boiling water, or other aqueous liquid, a dry mix containing solids to be suspended. Non-food uses include suspension of paint or cosmetic pigments in aqueous media, stabilizing oil-in-water emulsions or foams, and the like.

The performance advantages accruing from the stabilizing agent of this invention appear to be based on its three components: colloidal microcrystalline cellulose, a starch, and a non-thickening, water-soluble binder, all of which are in intimate admixture with each other. The inventors believe the presence of both the starch and non-thickening water-soluble binder are necessary to ensure that the colloidal microcrystalline cellulose-based stabilizing agent exhibits the desired rapid dispersing and suspending performance characteristics. Omission of either the starch or the binder from the stabilizing agent results in unacceptable performance, as the comparative examples described below illustrate.

Colloidal microcrystalline cellulose is a recognized dispersion and suspension aid, useful in suspending solids in aqueous media. Commercially-available colloidal microcrystalline celluloses normally require a strong agitation or mixing, with a significant amount of shear, to ensure that the individual particles of micro-crystalline cellulose are activated or "peptized," i.e., fully dispersed to provide good, long-term solids-suspending functionality. The presence of the non-thickening, water-soluble binder and starch components in the stabilizing agent of this invention enables the colloidal microcrystalline cellulose to be rapidly activated or peptized, with minimal mixing or stirring; high shear agitation is unnecessary.

Colloidal microcrystalline cellulose suitable for use in this invention is microcrystalline cellulose intimately associated with a minor amount of sodium carboxymethyl cellulose, typically about 3-15 wt. %. The sodium carboxymethyl cellulose is preferably one of low to medium viscosity, i.e., having a viscosity in a 1 wt. % aqueous dispersion of from 50-1000 centipoise at 20°C. A commercially-available colloidal microcrystalline cellulose of this type is Avicel® RC-591 colloidal microcrystalline cellulose, available from FMC Corporation. Although sodium carboxymethyl cellulose is a preferred material, other colloids, e.g., xanthan or methyl cellulose, may also be used to make an acceptable colloidal microcrystalline cellulose.

The colloidal microcrystalline cellulose in the stabilizing agent is ordinarily present in an amount of from around 25%-50%, but greater or lesser amounts may also be present with satisfactory results. In end-use applications for the stabilizing agent, the colloidal microcrystalline cellulose should be present in the final formulation of the reconstituted drink or food (e.g., obtained by mixing a dry mix containing the stabilizing agent with water) in an amount of about 0.5-3 wt. %, preferably 0.5-1.5 wt. %. The latter preferred range is especially suitable for chocolate drink formulations containing cocoa solids.

Just as important as the absolute amount of colloidal microcrystalline cellulose in the stabilizing agent are the amounts of starch and binder, relative to the colloidal microcrystalline cellulose. Only when colloidal microcrystalline cellulose is combined with starch and binder in the specified amounts do the unexpected, superior results occur: rapid dispersion and suspension of solids without lumping when a dry mix containing solids and the stabilizing agent is gently mixed or stirred with water or other aqueous medium; excellent long term (several hours) solids suspension in an aqueous medium without resorting to high shear mixing.

The second key component in the stabilizing agent composition is starch. The source of the starch is not critical and a wide variety of starches are satisfactory for use in this invention: corn, potato, wheat, rice, tapioca, and waxy maize starches, or starch-containing cereal flours such as wheat, flour, potato flour, etc.

Suitable starches that are commercially available include Melojel® and Clearjel® corn starches, Purity Gum 1773 waxy maize starch, Instant Pure-Flo F pregelatinized corn starch, all from National Starch and Chemical Company, Gelex® pregelatinized corn starch from American Maize-Products Company, and Mirasperse™ starch from A.E. Staley Manufacturing Company.

The starch is preferably one that has a relatively low amylose content. The above-noted Purity Gum 1773 starch is one example of such low amylose starch. Stabilizing agent compositions containing a low amylose starch exhibit excellent solids stabilization performance over extended periods of time, i.e., solids remain suspended for several hours with no visible settling occurring.

Pregelatinized starches are also preferred, since such starches facilitate rapid peptization of the colloidal microcrystalline cellulose in cold water. Starches that are not pregelatinized are better suited for stabilizing agent formulations intended to be used in dry mixes that are reconstituted with warm or hot aqueous media, whose temperature is above the starch gelatinization temperature. Since the amount of starch employed in stabilizing agent composition of this invention is relatively small, gelatinization of non-pregelatinized starches occurs quickly once the stabilizing agent is contacted with warm or hot aqueous media.

The starch is employed in the stabilizing agent composition in small amounts, relative to the colloidal microcrystalline cellulose. The starch is present in an amount less than the weight of colloidal microcrystalline cellulose but at least sufficient in amount to activate or peptize the colloidal microcrystalline cellulose in an aqueous medium, with minimal mixing or agitation of the aqueous medium, e.g., simple stirring for less than a minute. Levels of starch below the minimum required to activate the colloidal microcrystalline cellulose will result in visible solids lumping and/or sedimentation occurring when the stabilizing agent is used in dry mix formulations that are reconstituted in an aqueous medium.

The starch is desirably present in amounts below that which causes gelation-like thickening when the stabilizing agent is employed in an aqueous medium. In certain end-use applications for the stabilizing agent, e.g., instant gravy mixes the starch may be present in amounts that result in a thickening of the aqueous medium. For chocolate drink formulations, the level of starch is desirably below that amount which causes an undesirable thickening of the chocolate beverage and/or which causes an undesirable starchy taste in the beverage.

The amount of starch is desirably adjusted so as to yield a weight ratio of colloidal microcrystalline cellulose to starch, in the stabilizing agent, that is in the range of about 3:2 to 7:1, and more desirably in the range of about 2:1 to 6:1. These ratio ranges normally yield optimal performance of the stabilizing agent, particularly when used in chocolate drink formulations containing cocoa solids.

The third essential component in the stabilizing 5 agent of this invention is a non-thickening, water-soluble binder. The "binder" could also be characterized as a filler, diluent, or extender, but for purposes of this disclosure will be designated as a binder. The binder should be non-thickening in aqueous media, so as not to cause an unwanted increase in viscosity when the stabilizing agent is employed in an aqueous medium, to thereby provide its desired solids suspension functionality. The binder should also be water-soluble, which facilitates activation of the stabilizing agent when the agent is employed in an aqueous medium.

Suitable binders include carbohydrates that are characterized by being non-thickening and water-soluble in aqueous media, e.g., dextrose, polydextrose, corn syrup solids, lactose, etc.

The preferred non-thickening water-soluble binders are maltodextrin, whey and non-fat dry milk.

Maltodextrin is a polysaccharide obtained from hydrolyzation of cereal solids; it usually is in powder form. The maltodextrin preferably has a dextrose equivalent of about 9-12, for taste and flavor considerations. Commercially-available maltodextrins suitable for use in this invention include Maltrin® maltodextrins from Grain Processing Corporation and Amaizo Fro-Dex® maltodextrins from American Maize-Products Company.

Whey is a powdered dairy product obtained by spray drying of whey by-product from cheese manufacture. Sweet whey powder, obtained from sweet (as opposed to sharp, acid-curd) cheese production, is preferred.

Non-fat dry milk, also called milk solids not fat or non-fat milk powder, is another powdered dairy product that may be employed as the preferred non-thickening, water-soluble binder.

The water-soluble, non-thickening binder is employed in the stabilizing agent composition in amounts such that the weight ratio of binder to colloidal microcrystalline cellulose is within the range of about 0.6:1 to 9:1. Relatively large amounts of binder, i.e., binder to colloidal microcrystalline cellulose ratios of around 7:1 to 9:1, require that corresponding large quantities of stabilizing agent be used in end-use applications. This is necessary to achieve the desired level of colloidal microcrystalline cellulose (0.5-1.5 wt. %) that is preferably employed in an aqueous medium containing solids to be suspended. For this reason, the binder to colloidal microcrystalline cellulose weight ratio is preferably maintained within the range of about 0.6:1 to 4:1.

The stabilizing agent composition of this invention is a dry powder. The powder preferably contains relatively fine particles, on the order of 10-40 microns in size, which facilitate rapid activation or peptization of the colloidal microcrystalline cellulose when the agent is introduced to an aqueous medium. The stabilizing agent may also consist of or contain coarse-sized particles, e.g., up to about 250 microns in size. Such coarse particles may be granular particles or agglomerates or aggregates of fine-sized particles.

The stabilizing agent is prepared by coprocessing and codrying the three components described above to yield a product in dry powder form. This processing procedure yields a dry product in which the three components are in intimate association or admixture with each other. Conventional spray drying of an aqueous slurry containing colloidal microcrystalline cellulose, starch and water-soluble, non-thickening binder is the preferred method for coprocessing and codrying the components to yield the powdered stabilizing agent.

Coprocessing and codrying via other types of equipment are also feasible, although a satisfactory stabilizing agent is not as easily obtained as with conventional spray drying.

Two techniques believed to be suitable for preparing the coprocessed, codried stabilizing agent composition of this invention are (i) fluid bed drying, in which a slurry containing the three components is sprayed onto heated particles suspended in a fluidized bed, to yield an agglomerated particulate product, and (ii) fluidized spray drying, in which a fluidized bed zone in the lower portion of a spray dryer cone propels particles up into the spray zone where the incoming slurry is atomized into small droplets and dried.

In the preparation procedure using spray drying, a water slurry of colloidal microcrystalline cellulose, e.g., Avicel® RC-591 microcrystalline cellulose, in a suitable vessel is subjected to high shear agitation, with a high speed mixer or blender, centrifugal pump or homogenizer. The starch and non-thickening, water-soluble binder, e.g., maltodextrin, are then introduced to the aqueous mixture, in appropriate amounts relative to the colloidal microcrystalline cellulose and subjected to conventional mixing to ensure that the starch is uniformly distributed throughout the mixture and that the binder is substantially all dissolved. The aqueous mixture is next introduced to a conventional spray drying apparatus, where it atomized into droplets and dried to yield the stabilizing agent composition in the form of a fine powder.

The stabilizing agent composition may then be utilized in any of a variety of applications, in which a dry powder formulation containing the stabilizing agent is reconstituted with an aqueous medium, to provide good dispersion and suspension of fine solids contained in the formulation under conditions that allow only minimal agitation or low-shear mixing.

A preferred end-use for the stabilizing agent is in dry "instant" chocolate drink mixes, in which the cocoa solids desirably remain suspended in the beverage once the mix is reconstituted with hot water and with simple spoon stirring for a few seconds. Such dry mix instant chocolate mixes typically contain cocoa powder, sugar, an emulsifier (for the cocoa solids), and stabilizing agent (for dispersion and suspension of the cocoa solids). A representative dry mix would ordinarily be combined with hot water in amounts to yield about 1 wt. % cocoa solids, 8% sugar, and sufficient stabilizer to yield 1 wt. % colloidal microcrystalline cellulose is the reconstituted hot drink. Such chocolate drink dry mix formulations, like other formulations containing the stabilizing agent of this invention, may contain a wide variety of other conventional ingredients or additives, such as flavoring agents, coloring agents, preservatives, fillers, diluents, and the like.

## Examples

The following generalized procedure was used to prepare the spray-dried stabilizing agent compositions described in detail below.

Avicel® RC-591 colloidal microcrystalline cellulose, a white powder, was added to cold water contained in a stainless steel vessel in an amount sufficient to yield about 3-4 wt. % colloidal microcrystalline cellulose in the aqueous medium. The aqueous medium was then mixed for about thirty minutes using a propeller mixer to assure good dispersion of the microcrystalline cellulose. After this mixing, an aqueous gel formed in the aqueous medium at rest.

The desired amounts of starch and non-thickening, water-soluble binder, both in powder form, were then added to the aqueous gel and mixing contained for another fifteen minutes to ensure good dispersion of the starch and solubilization of the binder.

The aqueous medium containing the three components was next homogenized, in a Mouton-Gaulin homogenizer at 13800 kPa in the first stage and 3450 kPa in the second stage. This procedure resulted in an aqueous slurry in which the colloidal microcrystalline cellulose and starch were thoroughly dispersed to provide a homogeneous mixture suitable for spray drying.

The homogenized aqueous slurry was spray dried using a laboratory scale (91 cm diameter) Bowen spray dryer. Inlet temperature of the spray dryer was set at about 145°C, and the slurry feed rate to the dryer was adjusted to provide an outlet temperature of about 80°C. Spray atomization was accomplished with a 0.25 mm. nozzle operated at an atomizing air pressure of about 620 kPa.

The resultant spray-dried stabilizing agent powders were evaluated for efficacy in a dry mix chocolate drink formulation, obtained by dry blending of the following components: stabilizing agent, cocoa, sugar (sucrose), and Cremora™ non-dairy creamer (Borden, Inc.) as a cocoa whitening agent. The dry mix formulation was then reconstituted by spoon stirring for 15-30 seconds in hot water, at a temperature of 93°C (200°F), to yield the following composition:

stabilizing agent (in an amount sufficient to provide about 1 wt. % colloidal microcrystalline cellulose in the reconstituted drink)

cocoa - 1 wt. %

sucrose - 8.1 wt. %

Cremora non-dairy creamer - 1.6%

Sufficient hot water was used to provide the above-noted component concentrations. The relative amounts of the components in the dry mix formulation were determined by reverse calculation from the above-noted reconstituted drink composition.

The amount of stabilizing agent employed typically was within the range of 2.5-4 wt. %, usually about 3 wt. %. The exact amount depended on the concentration of colloidal microcrystalline cellulose present in the stabilizing agent, which in turn determined the amount of agent needed to provide 1 wt. % colloidal microcrystalline cellulose in the reconstituted drink.

Functionality of the stabilizing agent in the chocolate drink formulation was measured by the ability of the stabilizing agent to maintain the 1 wt. % cocoa solids in suspension. Suspension stability was determined by observation of the chocolate drink six hours after the initial spoon stirring mixing; the absence of sediment indicated good stability. Microscopic examination of the chocolate drink was also carried out to determine the degree of microcrystalline cellulose particle dispersion, since the presence of undispersed microcrystalline cellulose particle clusters or aggregates ordinarily correlates well with unsatisfactory solids suspension performance.

Several examples of the stabilizing agent of this invention were prepared following the procedure just described. Comparative examples were also carried out under similar conditions as a means of illustrating the criticality of various elements of the inventive stabilizing agents. Pertinent data for all of these examples are reported in Tables I and II.

The examples illustrate the use of various starches and of three non-thickening, water-soluble binders, maltodextrin, whey and non-fat dry milk. All examples employed Avicel® RC-591F colloidal microcrystalline cellulose (available from FMC Corporation) for the colloidal microcrystalline cellulose component of the stabilizing agent.

Various concentration levels for the three components of the stabilizing agent are likewise illustrated.

Performance results for the exemplified stabilizing agents, when used in a standardized dry mix chocolate drink formulation reconstituted with hot water, are included in Table II, and these data were obtained using the general procedures described earlier.

Examples 1-4 in the Tables illustrate the use of four different starches in a spray-dried stabilizing agent containing colloidal microcrystalline cellulose, starch and non-fat dry milk as the binder. The resultant stabilizing agents gave similar, very good performance characteristics in the standardized chocolate drink formulation.

Comparative Examples A and B involved substitution of hydroxypropylmethyl cellulose and locust bean gum, respectively, in lieu of the starch of Examples 1-4. Comparative Example C was a spray-dried material containing no starch, only colloidal microcrystalline cellulose and non-fat milk solids as the binder. All products were unsatisfactory when evaluated in the standardized chocolate drink formulation.

Example 5 illustrates a stabilizing agent composition utilizing whey as the binder and Example 7 illustrates a stabilizing agent composition containing maltodextrin as the binder. The component proportions of Examples 1, 5 and 7 are identical, differing only in the type of binder used. Performance results of these stabilizing agents in the chocolate drink formulation were uniformly very good.

Examples 6-11 illustrate stabilizing agents containing colloidal microcrystalline cellulose (CMCC), starch and maltodextrin, in which the CMCC:starch ratio was varied from 3:1 to 7:1. All gave very good performance results in the chocolate drink formulation. Comparative Example D illustrates an excessively low starch ratio, i.e., 8:1 CMCC:starch, that gave unsatisfactory solids stabilization performance. In Comparative Example E, the starch was omitted altogether and solids stabilization performance in the chocolate drink formulation was poor. In both of these examples, the low level and absence of starch appear to adversely affect activation or peptization of the colloidal microcrystalline cellulose in the spray-dried compositions.

Examples 12-15 illustrate stabilizing agents containing colloidal microcrystalline cellulose (CMCC), starch and maltodextrin, in which the binder:CMCC ratio was varied from 2.8:1 to 0.8:1. All gave very good performance results in the chocolate drink formulation. Comparative Example F illustrates a maltodextrin binder:CMCC ratio of 0.5:1; solids stabilization performance was marginal. Comparative Example G illustrates a very low maltodextrin binder:CMCC ratio of 0.1:1, and Comparative Example H illustrates a composition having no binder whatsoever. Both of these comparative examples exhibited unsatisfactory solids stabilization performance when the compositions were evaluated in the chocolate drink formulation.

TABLE I

| Example | | Components | Component Concentration (wt %) | CMCC:Starch Wt Ratio | Binder:CMCC* Wt Ratio |
|---|---|---|---|---|---|
| | | **Stabilizing Agent Composition** | | | |
| 1 | | Colloidal microcrystalline cellulose (CMCC) | 30 | | |
| | | Melojel® starch | 10 | | |
| | | Non-fat dry milk (NFDM) | 60 | 3:1 | 2:1 |
| 2 | | CMCC | 30 | | |
| | | Clearjel® starch | 10 | | |
| | | NFDM | 60 | 3:1 | 2:1 |
| 3 | | CMCC | 30 | | |
| | | Gelex® starch | 10 | | |
| | | NFDM | 60 | 3:1 | 2:1 |
| 4 | | CMCC | 30 | | |
| | | Pure-Flo F starch | 10 | | |
| | | NFDM | 60 | 3:1 | 2:1 |
| Comparative | A | CMCC | 30 | | |
| | | Hydroxypropylmethyl cellulose | 10 | | |
| | | NFDM | 60 | 3:1 | 2:1 |
| Comparative | B | CMCC | 30 | | |
| | | Locust bean gum | 10 | | |
| | | NFDM | 60 | 3:1 | 2:1 |
| Comparative | C | CMCC | 25 | | |
| | | NFDM | 75 | no starch | 3:1 |
| 5 | | CMCC | 30 | | |
| | | Melojel starch | 10 | | |
| | | Whey | 60 | 3:1 | 2:1 |
| 6 | | CMCC | 26.7 | | |
| | | Melojel starch | 13.3 | | |
| | | Maltodextrin | 60 | 2:1 | 2.2:1 |
| 7 | | CMCC | 30 | | |
| | | Melojel starch | 10 | | |
| | | Maltodextrin | 60 | 3:1 | 2:1 |
| 8 | | CMCC | 32 | | |
| | | Melojel starch | 8 | | |
| | | Maltodextrin | 60 | 4:1 | 1.9:1 |

TABLE I

(continued)

|  | | | | Stabilizing Agent Composition | | |
|---|---|---|---|---|---|---|
|  | | | | Component Concentration (wt %) | CMCC:Starch Wt Ratio | Binder:CMCC* Wt Ratio |
| Example | | Components | | | | |
|  | 9 | CMCC | | 33.3 | | |
|  |  | Melojel starch | | 6.7 | | |
|  |  | Maltodextrin | | 60 | 5:1 | 1.8:1 |
|  | 10 | CMCC | | 34.3 | | |
|  |  | Melojel starch | | 5.7 | | |
|  |  | Maltodextrin | | 60 | 6:1 | 1.8:1 |
|  | 11 | CMCC | | 35 | | |
|  |  | Melojel starch | | 5 | | |
|  |  | Maltodextrin | | 60 | 7:1 | 1.7:1 |
| Comparative | D | CMCC | | 35.6 | | |
|  |  | Melojel starch | | 4.4 | | |
|  |  | Maltodextrin | | 60 | 8:1 | 1.7:1 |
| Comparative | E | CMCC | | 40 | | |
|  |  | Maltodextrin | | 60 | no starch | 1.5:1 |
|  | 12 | CMCC | | 25 | | |
|  |  | Melojel starch | | 5 | | |
|  |  | Maltodextrin | | 70 | 5:1 | 2.8:1 |
|  | 13 | CMCC | | 30 | | |
|  |  | Melojel starch | | 6 | | |
|  |  | Maltodextrin | | 64 | 5:1 | 2.1:1 |
|  | 14 | CMCC | | 51.4 | | |
|  |  | Melojel starch | | 8.6 | | |
|  |  | Maltodextrin | | 40 | 6:1 | 1.0:1 |
|  | 15 | CMCC | | 50 | | |
|  |  | Melojel starch | | 10 | | |
|  |  | Maltodextrin | | 40 | 5:1 | 0.8:1 |
| Comparative | F | CMCC | | 58.3 | | |
|  |  | Melojel starch | | 11.7 | | |
|  |  | Maltodextrin | | 30 | 5:1 | 0.5:1 |
| Comparative | G | CMCC | | 75 | | |
|  |  | Melojel starch | | 15 | | |
|  |  | Maltodextrin | | 10 | 5:1 | 0.1:1 |

8

TABLE I

(continued)

| | | Stabilizing Agent Composition | | |
| | | Component Concentration (wt %) | CMCC:Starch Wt Ratio | Binder:CMCC* Wt Ratio |
| Example | Components | | | |
| Comparative N | CMCC | 83.3 | | |
| | Melojel starch | 16.7 | 5:1 | no binder |

*CMCC = colloidal microcrystalline cellulose

TABLE II

| Example | Stabilizing Agent Concentration (wt %)** | Stability of Dispersed Cocoa (after 6 hours) | CMCC* Dispersion |
|---|---|---|---|
| 1 | 3.3 | good; stable | very good |
| 2 | 3.3 | good; stable | very good |
| 3 | 3.3 | good; stable | very good |
| 4 | 3.3 | good; stable | very good |
| Comparative A | 3.3 | poor; dense, compacted sediment | poor; undispersed CMCC aggregates |
| Comparative B | 3.3 | poor; dense, compacted sediment | poor; undispersed CMCC aggregates |
| Comparative C | 4.0 | poor; dense, compacted sediment | poor; undispersed CMCC aggregates |
| 5 | 3.3 | good; stable | very good |
| 6 | 3.75 | good; stable | very good |
| 7 | 3.3 | good; stable | very good |
| 8 | 3.1 | good; stable | very good |
| 9 | 3.0 | good; stable | very good |
| 10 | 2.9 | good; stable | very good |
| 11 | 2.9 | good; stable | good |
| Comparative D | 2.8 | fair; loose, voluminous sediment | fair, partially dispersed CMCC aggregates |
| Comparative E | 2.5 | poor; dense, compacted sediment | poor; undispersed CMCC aggregates |
| 12 | 4.0 | good; stable | very good |
| 13 | 3.3 | good; stable | very good |
| 14 | 2.0 | good; stable | good |
| 15 | 2.0 | good; stable | good |

EP 0 347 402 B1

TABLE II
(continued)

| Example | | Stabilizing Agent Concentration (wt %)** | Stability of Dispersed Cocoa (after 6 hours) | CMCC* Dispersion |
|---|---|---|---|---|
| Comparative | F | 1.7 | fair; loose, voluminous sediment | fair; partially dispersed CMCC aggregates |
| Comparative | G | 1.3 | poor; dense, compacted sediment | poor; undispersed CMCC aggregates |
| Comparative | H | 1.2 | poor; dense, compacted sediment | poor; undispersed CMCC aggregates |

*CMCC - colloidal microcrystalline cellulose
**Corresponds to 1% CMCC in formulated chocolate drink

## Claims

1. A stabilizing agent, useful as a rapid dispersing agent for suspending solids in an aqueous medium, characterized in that it comprises a coprocessed, codried powdered composition containing
   (i) colloidal microcrystalline cellulose;
   (ii) starch, in an amount less than the weight of colloidal microcrystalline cellulose but sufficient in amount to activate the colloidal microcrystalline cellulose in an aqueous medium, promoting its rapid peptization with minimal agitation of the aqueous medium; and
   (iii) a non-thickening, water-soluble binder, in an amount such that the weight radio of blinder to colloidal microcrystalline cellulose is within the range of 0.6:1 to 9:1.

2. The stabilinzing agent composition according to claim 1, characterized in that the composition is a spray-dried composition.

3. The stabilizing agent composition according according to claim 1, characterized in that the colloidal microcrystalline cellulose in the stabilizing agent is ordinarily present in a preferred amount of 25-50%.

4. The stabilizing agent composition according to any one of the preceding claims, characterized in that the colloidal microcrystalline cellulose is microcystalline cellulose intimately associated with a minor amount of sodium carboxymethyl cellulose.

5. The stabilizing agent composition according to any one of the preceding claims, characterized in that the starch is a low amylose starch.

6. The stabilizing agent composition according to any one of the preceding claims, characterized in that the starch is a pregelatinized starch.

7. The stabilizing agent composition according to any one of the preceding claims, characterized in that the concentration of starch is maintained below that amount which causes gelation-like thickening.when the agent is employed in the aqueous medium.

8. The stabilizing agent composition according to any one of the preceding claims, characterized in that the colloidal microcrystalline cellulose and starch are present in amounts such that the weight ratio of colloidal

11

microcrystalline cellulose to starch is within the range of 3:2 to 7:1.

9. The stabilizing agent composition according to claim 8, characterized in that the colloidal microcrystalline cellulose and starch are present in amounts such that the weight ratio of colloidal microcrystalline cellulose to starch is within the range 2:1 to 6:1.

10. The stabilizing agent composition according to any one of the preceding claims, characterized in that the non-thickening, water-soluble binder is a carbohydrate.

11. The stabilizing agent composition according to claim 10, characterized in that the non-thickening, water-soluble binder, is selected from the group consisting of maltodextrin, whey, and non-fat dry milk.

12. The stabilizing agent composition according to any one of the preceding claims, characterized in that the binder and colloidal microcrystalline cellulose are present in amounts such that the weight ratio of binder to colloildal microcrystalline cellulose is within the range of 0.6:1 to 4:1.

13. An aqueous food formulation characterized by containing the stabilizing agent composition according to any one of the preceding claims in an amount sufficient to provide 0.5-3 weight % colloidal microcrystalline cellulose therein.

14. The aqueous food formulation according to claim 13, characterized in that the food formulation is a reconstituted aqueous chocolate or cocoa beverage that contains 0.5-1.5 weight % colloidal microcrystalline cellulose.

## Patentansprüche

1. Stabilisator, der als rasches Dispergiermittel zum Suspendieren von Feststoffen in einem wässerigen Medium verwendbar ist, dadurch gekennzeichnet, daß er eine gemeinsam behandelte, gemeinsam getrocknete pulverförmige Zusammensetzung umfaßt, die :
   (i) kolloidale mikrokristalline Zellulose,
   (ii) Stärke in einer Menge, die niedriger ist als das Gewicht der kolloidalen mikrokristallinen Zellulose, aber ausreichend ist, die kolloidale mikrokristalline Zellulose in einem wässerigen Medium zu aktivieren, wodurch deren rasche Peptisierung mit minimalem Rühren des wässerigen Mediums begünstigt wird, und
   (iii) ein nicht-verdickendes, wasserlösliches Bindemittel in einer solchen Menge, daß das Gewichtsverhältnis des Bindemittels zur kolloidalen mikrokristallinen Zellulose im Bereich von 0,6:1 bis 9:1 liegt, enthält.

2. Stabilisatorzusammensetzung nach Anspruch 1, dadurch gekennzeichnet, daß die Zusammensetzung eine sprühgetrocknete Zusammensetzung ist.

3. Stabilisatorzusammensetzung nach Anspruch 1, dadurch gekennzeichnet, daß die kolloidale mikrokristalline Zellulose in den Stabilisator in allgemeinen in eine bevorzugte Menge von 25 bis 50% vorhanden ist.

4. Stabilisatorzusammensetzung nach einem der vorhergehenden Ansprüche, dadurch gekennzeichnet, daß die kolloidale mikrokristalline Zellulose mikrokristalline Zellulose ist, die mit einer geringeren Menge Natriumcarboxymethylzellulose innig assoziiert ist.

5. Stabilisatorzusammensetzung nach einem der vorhergehenden Ansprüche, dadurch gekennzeichnet, daß die Stärke eine niedere Amylosestärke ist.

6. Stabilisatorzusammensetzung nach einem der vorhergehenden Ansprüche, dadurch gekennzeichnet, daß die Stärke eine vorgelatinierte Stärke ist.

7. Stabilisatorzusammensetzung nach einem der vorhergehenden Ansprüche, dadurch gekennzeichnet, daß die Konzentration der Stärke unter jener Menge gehalten wird, die gelierungsähnliches Verdicken bewirkt, wenn das Mittel im wässerigen Medium verwendet wird.

8. Stabilisatorzusammensetzung nach einem der vorhergehenden Ansprüche, dadurch gekennzeichnet, daß die kolloidale mikrokristalline Zellulose und die Stärke in solchen Mengen vorhanden sind, daß das Gewichtsverhältnis der kolloidalen mikrokristallinen Zellulose zur Stärke im Bereich von 3:2 bis 7:1 liegt.

9. Stabilisatorzusammensetzung nach Anspruch 8, dadurch gekennzeichnet, daß die kolloidale mikrokristalline Zellulose und die Stärke in solchen Mengen vorhanden sind, daß das Gewichtsverhältnis der kolloidalen mikrokristallinen Zellulose zur Stärke im Bereich von 2:1 bis 6:1 liegt.

10. Stabilisatorzusammensetzung nach einem der vorhergehenden Ansprüche, dadurch gekennzeichnet, daß das nicht-verdickende wasserlösliche Bindemittel ein Kohenhydrat ist.

11. Stabilisatorzusammensetzung nach Anspruch 10, dadurch gekennzeichnet, daß der nichtverdickende wasserlösliche Bindemittel ausgewählt ist aus der Gruppe bestehend aus Maltodextrin, Molke und Trockenmagermilch.

12. Stabilisatorzusammensetzung nach einem der vorhergehenden Ansprüche, dadurch gekennzeichnet, daß das Bindemittel und die kolloidale mikrokristalline Zellulose in solchen Mengen vorhanden sind, daß das Gewichtsverhältnis von Bindemittel zu kolloidaler mikrokristalliner Zellulose im Bereich von 0,6:1 bis 4:1 liegt.

13. Wässerige Lebensmittelformulierung, dadurch gekennzeichnet, daß sie die Stabilisatorzusammensetzung nach einem der vorhergehenden Ansprüche in einer Menge enthält, die ausreichend ist, darin 0,5 bis 3 Gew.% kolloidale mikrokristalline Zellulose vorzusehen.

14. Wässerige Lebensmittelformulierung nach Anspruch 13, dadurch gekennzeichnet, daß die Lebensmittelformuliering ein rekonstituiertes wässeriges Schokoladen- oder Kakaogetränk ist, das 0,5 bis 1,5 Gew.% kolloidale mikrokristalline Zellulose enthält.

## Revendications

1. Agent stabilisant utile comme agent dispersant rapide pour mettre des solides en suspension dans un milieu aqueux, caractérisé en ce qu'il comprend une composition en poudre cotraitée et coséchée contenant :
   (i) de la cellulose microcristalline colloïdale;
   (ii) de l'amidon en une quantité inférieure au poids de cellulose microcristalline colloïdale, mais en une quantité suffisante pour activer la cellulose microcristalline colloïdale dans un milieu aqueux, favorisant sa peptisation rapide avec une agitation minimale du milieu aqueux, et
   (iii) un liant non épaississant et soluble dans l'eau, en une quantité telle que le rapport pondéral du liant à la cellulose microcristalline colloïdale se situe dans l'intervalle de 0,6:1 à 9:1.

2. Composition d'agent stabilisant suivant la revendication 1, caractérisée en ce que la composition est une composition séchée par pulvérisation.

3. Composition d'agent stabilisant suivant la revendication 1, caractérisée en ce que la cellulose microcristalline colloïdale dans l'agent stabilisant est présente en général en une quantité préférentielle de 25 à 50%.

4. Composition d'agent stabilisant suivant l'une quelconque des revendications précédentes, caractérisée en ce que la cellulose microcristalline colloïdale est de la cellulose microcristalline intimement associée à une quantité mineure de carboxyméthylcellulose sodique.

5. Composition d'agent stabilisant suivant l'une quelconque des revendications précédentes, caractérisée en ce que l'amidon est un amidon à faible teneur en amylose.

6. Composition d'agent stabilisant suivant l'une quelconque des revendications précédentes, caractérisée en ce que l'amidon est un amidon prégélatinisé.

7. Composition d'agent stabilisant suivant l'une quelconque des revendications précédentes, caractérisée en ce que la concentration de l'amidon est maintenue inférieure à la quantité qui provoque un épaississement semblable à une gélification lorsque l'agent est utilisé dans le milieu aqueux.

8. Composition d'agent stabilisant suivant l'une quelconque des revendications précédentes, caractérisée en ce que la cellulose microcristalline colloïdale et l'amidon sont présents en quantités telles que le rapport pondéral de la cellulose microcristalline colloïdale à l'amidon se situe dans l'intervalle de 3:2 à 7:1.

9. Composition d'agent stabilisant suivant la revendication 8, caractérisée en ce que la cellulose microcristalline colloïdale et l'amidon sont présents en quantités telles que le rapport pondéral de la cellulose microcristalline colloïdale à l'amidon se situe dans l'intervalle de 2:1 à 6:1.

10. Composition d'agent stabilisant suivant l'une quelconque des revendications précédentes, caractérisée en ce que le liant non épaississant et soluble dans l'eau est un hydrate de carbone.

11. Composition d'agent stabilisant suivant la revendication 10, caractérisée en ce que le liant non épaississant et soluble dans l'eau est choisi dans la classe formée par la maltodextrine, le petit-lait et le lait écrémé en poudre.

12. Composition d'agent stabilisant suivant l'une quelconque des revendications précédentes, caractérisée en ce que le liant et la cellulose microcristalline colloïdale sont présents en quantités telles que le rapport pondéral du liant à la cellulose microcristalline colloïdale se situe dans l'intervalle de 0,6:1 à 4:1.

13. Composition alimentaire aqueuse, caractérisée en ce qu'elle contient la composition d'agent stabilisant suivant l'une quelconque des revendications précédentes en une quantité suffisante pour y apporter 0,5 à 3% en poids de cellulose microcristalline colloïdale.

14. Composition alimentaire aqueuse suivant la revendication 13, caractérisée en ce que la composition alimentaire est une boisson aqueuse au chocolat ou au cacao reconstituée qui contient 0,5 à 1,5% en poids de cellulose microcristalline colloïdale.